# EUROPÄISCHE PATENTSCHRIFT

(11) **EP 3 768 067 B1**
(45) Veröffentlichungstag und Bekanntmachung des Hinweises auf die Patenterteilung: **03.01.2024**
(21) Anmeldenummer: 19713429.9
(22) Anmeldetag: 21.03.2019
(51) Int. Cl.: A01F 15/14, A01D 59/04, B65B 13/18

(54) **GARNKNOTERANORDNUNG ZUM KNOTEN VON GARN UND BALLENPRESSVORRICHTUNG**
TWINE KNOTTER ASSEMBLY FOR KNOTTING TWINE AND BALING PRESS DEVICE
ENSEMBLE DE NOUAGE DE FILS ET DISPOSITIF DE COMPRESSION DE BALLES

(30) Priorität: 23.03.2018 DE 202018101650 U
(43) Veröffentlichungstag der Anmeldung: 27.01.2021
(73) Patentinhaber: Rasspe Systemtechnik GmbH, 42929 Wermelskirchen (DE)
(72) Erfinder: ACIMAS, Andreas, 42699 Solingen (DE); BALDSIEFEN, Karsten, 51789 Lindlar (DE)
(74) Vertreter: Neumann Müller Oberwalleney Patentanwälte PartG mbB
(86) Internationale Anmeldenummer: PCT/EP2019/057150
(87) Internationale Veröffentlichungsnummer: WO 2019/180172

(56) Entgegenhaltungen:
- EP-A1- 2 941 951
- WO-A2-2013/185832
- CN-U- 203 691 996
- US-A- 5 783 816
- US-A- 5 855 166

## Beschreibung

Die Erfindung betrifft eine Garnknoteranordnung zum Knoten von Garn zum Umschnüren eines Ballens. Die Garnknoteranordnung weist einen Garnknoter und eine Bindenadel zum Zuführen von Garnsträngen in einen Knoterbereich des Garnknoters auf.

Eine solche Garnknoteranordnung ist aus der EP 2 941 951 A1 bekannt. Die Garnknoteranordnung ist Teil einer stationären Ballenpresse zum Pressen und Binden von Ballen aus Recyclingmaterial in der Abfallwirtschaft. Sie weist einen horizontal angeordneten Pressenkanal mit an einer oberen Seite angeordneten Knotern auf. Je Knoter wird von einer Oberseite des Pressenkanals ein oberer Garnstrang und von einer Unterseite des Pressenkanals ein unterer Garnstrang zugeführt. Um die beiden Garnstränge miteinander zu verknoten, weist die Garnknoteranordnung eine Nadel auf, die vertikal von oben kommend bis zu Unterseite des Pressenkanals bewegt wird, dort den unteren Garnstrang aufnimmt und durch eine Rückhubbewegung der Nadel nach oben führt. Dort wird dann der untere Garnstrang zusammen mit dem oberen Garnstrang einem Knoterbereich des Knoters zugeführt, um dort verknotet zu werden.

Eine weitere Garnknoteranordnung ist aus der WO 2013/185832 A2 bekannt. Dort ist ein Garnknoter mit einem Knoterrahmen, einer Zwischenwelle, die am Knoterrahmen um eine Drehachse drehbar gelagert ist und die einen Welleneingang zum Verbinden der Zwischenwelle mit einem Abtriebselement einer Knoterantriebswelle aufweist, sowie mindestens eine um eine Knoterhakenachse drehbar am Knoterrahmen gelagerte Knoterhakenwelle, die mit der Zwischenwelle antriebsverbunden ist und einen Knoterhaken zum Bilden eines Garnknotens trägt, beschrieben. Vorzugsweise weist hierbei der Garnknoter zwei Knoterhakenwellen mit jeweils einem Knoterhaken auf, die jeweils mit der Zwischenwelle antriebsverbunden sind.

Garnknoter oder -knüpfer werden in vorwiegend mobilen Großrechteckpackenpressen für Stroh, Heu, Silage und ähnlichem Gut sowie in der Wertstoffverwertung, zum Beispiel für die Bündelung von Papier, Textilien, dünnen Blechen und dergleichen eingesetzt. Mit solchen Garnknotern ausgerüstete Binde- oder Bündeleinrichtungen können auch Bestandteil von Verpackungsanlagen für die Umschnürung von Packen, Ballen oder Bündeln aus hierfür geeigneten Materialien sein. In stationären oder mobilen Großpackenpressen wird das Pressgut in einen im Querschnitt zumindest rechteckigen Presskanal, vorwiegend vorverdichtet, eingefüllt und zu einem rechteckigen Gutstrang gepresst. Dieser wird in quaderförmige Packen - gebräuchlich ist auch die Bezeichnung Vierkantballen - abgeteilt, deren Ober- und Unterseite sowie deren Außenseiten in Längsrichtung des Presskanals mit mehreren Garnsträngen umreift werden, die vor dem Ausstoß des Packens verknotet werden.

Die Zuführung der notwendigen Garne, der Knotvorgang innerhalb des Garnknoters sowie die Mitwirkung der am Zustandekommen eines Doppelknotens beteiligten Presselemente sind für herkömmliche Doppelknoter in DE 27 59 976 C1 beschrieben.

Um einen Knoten zu bilden, werden ein oberer Garnstrang und ein unterer Garnstrang in einen Arbeitsbereich eines Knoterhakens geführt und auf den Knoterhaken abgelegt. Daraufhin wird der Knoterhaken gedreht, sodass sich die Garnstränge um den Knoterhaken wickeln und anschließend durch Einklemmen am Knoterhaken und Abziehen der durch das Aufwickeln gebildeten Schlaufe ein Knoten gebildet wird. Bei diesem Aufwickelvorgang, insbesondere wenn zwei parallel angeordnete Knoterhakenwellen und Knoterhaken vorgesehen sind, können erhöhte Zugkräfte auftreten, die von dem einen oder den beiden Knoterhaken in den Garnstrang eingebracht werden. Diese Zugkräfte können gegebenenfalls die Streckgrenze des verwendeten Garnmaterials übersteigen. Dies führt dann gegebenenfalls zum Abriss des Garns.

Aufgabe der vorliegenden Erfindung ist es, eine Garnknoteranordnung und eine Ballenpressvorrichtung bereitzustellen, bei der eine Zugkraft im Garnmaterial vermieden wird, bei der die Streckgrenze des Garnmaterials überschritten würde.

Die Aufgabe wird durch eine Garnknoteranordnung zum Knoten von Garn zum Umschnüren eines Ballens gelöst, die einen Garnknoter und eine Bindenadel zum Zuführen von Garnsträngen in einen Knoterbereich des Garnknoters aufweist. Ferner weist die Garnknoteranordnung eine relativ zum Garnknoter einstellbare Umlenkrolle, über die vom Ballen kommendes Garn in Richtung zum Garnknoter umgelenkt wird, und eine Verstelleinrichtung zum Verstellen der Position der Umlenkrolle in Abhängigkeit der von dem Garn auf die Umlenkrolle ausgeübten Kraft auf.

Durch die Umlenkung des Garnstrangs durch die Umlenkrolle sind ein zur Umlenkrolle führender Garnstrangabschnitt und ein von der Umlenkrolle wegführender Garnstrangabschnitt winklig zueinander angeordnet. Durch eine Zugkraft, die auf den gesamten Garnstrang einwirkt, ergibt sich somit eine Radialkraft, die von dem Garnstrang auf die Umlenkrolle einwirkt. Die Verstelleinrichtung ermöglicht nun eine Verlagerung der Umlenkrolle in Abhängigkeit der vom Garn auf die Umlenkrolle ausgeübten Kraft. Da der Umschlingungswinkel des Garns um die Umlenkrolle mit Verlagerung der Umlenkrolle bei steigender Kraft kleiner wird, wird die Zugkraft innerhalb des Garnstrangs reduziert. Die Verstelleinrichtung kann hierbei ein Federelement aufweisen, durch welches es verstellbar ist, oder hydraulisch oder pneumatisch verstellbar sein.

In einer Ausgestaltung weist die Garnknoteranordnung einen Rahmen auf, an dem die Umlenkrolle translatorisch bewegbar geführt ist. Die Verstelleinrichtung kann einerseits am Rahmen gelagert sein und andererseits gegen die Umlenkrolle abgestützt sein. Ferner kann die Verstelleinrichtung in der Länge verstellbar sein.

Die Umlenkrolle kann an einem Rollenhalter befestigt sein, der mit der Verstelleinrichtung verbunden ist.

Zur Führung der Umlenkrolle kann der Rollenhalter seitlich vorstehende Führungszapfen aufweisen, die in Führungsnuten des Rahmens geführt sind.

In einer beispielhaften Ausgestaltung kann die Verstelleinrichtung eine teleskopierbare Stange aufweisen, die zur Einnahme einer ausgefahrenen Stellung mit Kraft beaufschlagt ist, zum Beispiel mittels eines Federelements.

In einem Ausführungsbeispiel weist der Garnknoter der Garnknoteranordnung einen Knoterrahmen, eine Zwischenwelle und mindestens eine Knoterhakenwelle auf. Die Zwischenwelle, ist am Knoterrahmen um eine Längsachse drehbar gelagert und weist einen Welleneingang zum Verbinden der Zwischenwelle mit einem Abtriebselement einer Knoterantriebswelle auf. Die mindestens eine Knoterhakenwelle ist um eine Knoterhakenachse drehbar am Knoterrahmen gelagerte, mit der Zwischenwelle antriebsverbunden und trägt einen Knoterhaken zum Bilden eines Knotens.

Hierbei kann der Garnknoter als eigenständige Baueinheit ausgebildet sein, wobei der Garnknoter über den Welleneingang der Zwischenwelle lösbar mit der Knoterantriebswelle antriebsverbindbar ist.

Es können zwei Knoterhakenwellen vorgesehen sein, die jeweils um eine Knoterhakenachse drehbar am Knoterrahmen gelagert sind und die jeweils mit der Zwischenwelle antriebsverbunden sind.

Ferner kann die Garnknoteranordnung eine Umlenkvorrichtung zum Umlenken von Garnsträngen aufweisen, die an dem Knoterrahmen verstellbar gehalten und von der Zwischenwelle angetrieben ist.

Ferner wird die Aufgabe durch eine Ballenpressvorrichtung mit einer oben beschriebenen Garnknoteranordnung gelöst, wobei die Ballenpressvorrichtung einen Presskanal aufweist, in den mittels eines Presskolbens Ballenmaterial in einer Pressrichtung zu einem Ballen gepresst wird. Der Garnknoter ist seitlich des Presskanals angeordnet, wobei die Umlenkrolle zwischen Presskanal und Garnknoter angeordnet ist, und wobei die Umlenkrolle zumindest im Wesentlichen parallel zur Pressrichtung verstellbar ist.

Hierbei kann die Umlenkrolle derart angeordnet sein, dass das Garn zumindest im Wesentlichen in Pressrichtung zum Garnknoter geführt wird.

Ein Ausführungsbeispiel einer Garnknoteranordnung wird im Folgenden anhand der Figuren näher erläutert. Hierin zeigt:
- Figur 1: einen Garnknoter in perspektivischer Ansicht,
- Figuren 2 - 8: den Garnknoter gemäß Figur 1 in perspektivischen Darstellungen und in unterschiedlichen Stellungen der einzelnen Bauteile zur Verdeutlichung eines Bindevorgangs,
- Figuren 9 - 16: eine Bindeeinrichtung mit einem Garnknoter gemäß Figur 1 in Seitenansicht zur Verdeutlichung des Bindevorgangs unter Verwendung einer Bindenadel mit zwei Rollen,
- Figur 17: eine Seitenansicht einer erfindungsgemäßen Garnknoteranordnung mit einem Garnknoter nach den Figuren 1 bis 16,
- Figur 18: eine vergrößerte perspektivische Darstellung der Garnknoteranordnung gemäß Figur 17 im Bereich der Umlenkrolle und
- Figur 19: eine Skizze der Kraftverhältnisse an der Umlenkrolle.

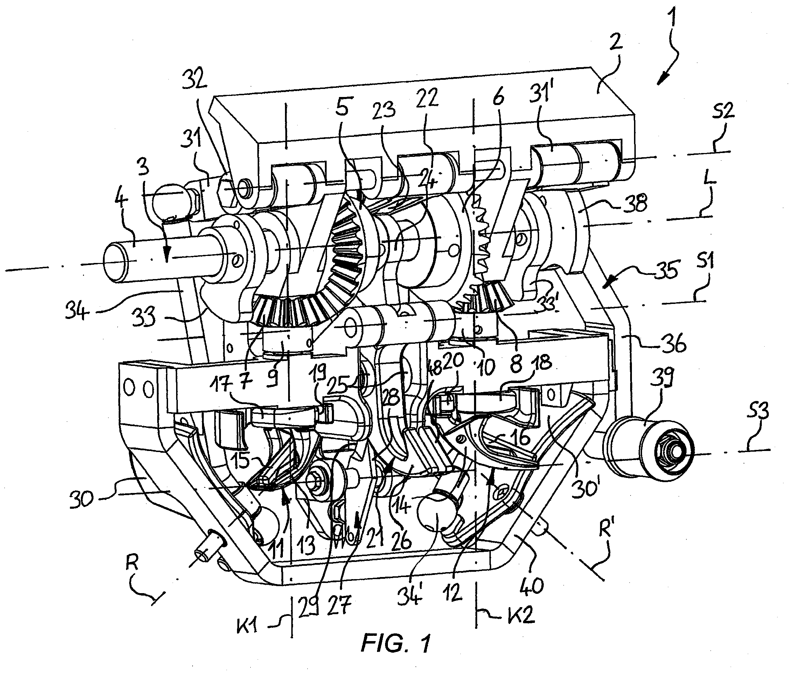

Figur 1 zeigt einen Garnknoter 1, der einen Knoterrahmen 2 aufweist, an dem alle Funktionsbauteile des Garnknoters befestigt sind, so dass dieser eine eigenständige Baueinheit bildet. An dem Knoterrahmen 2 ist eine Zwischenwelle 3 um eine Längsachse L drehbar gelagert. Die Zwischenwelle 3 weist einen Welleneingang 4 auf, mit dem die Zwischenwelle 3 an einem Abtriebselement einer Knoterantriebswelle antriebsverbunden werden kann. Im vorliegenden Fall ist der Welleneingang 4 als Wellenzapfen gestaltet, der mit einem später erläuterten Abtriebselement eines Winkelgetriebes mit der Knoterantriebswelle verbindbar ist. Auf der Zwischenwelle 3 sind ein erstes Antriebskegelrad 5 und ein zweites Antriebskegelrad 6 drehfest befestigt. Die beiden Antriebskegelräder 5, 6 sind zu einer Symmetrieebene, die senkrecht zur Längsachse L angeordnet ist, spiegelbildlich angeordnet und ausgebildet. Dies bedeutet, dass die Verzahnungen der beiden Antriebskegelräder 5, 6 voneinander weg weisen. Grundsätzlich könnten sie auch einander zugewandt sein. Die Verzahnungen der Antriebskegelräder 5, 6 verlaufen unterbrechungsfrei um den Umfang. Das erste Antriebskegelrad 5 ist in Verzahnungseingriff zu einem ersten Abtriebskegelrad 7, welches fest auf einer ersten Knoterhakenwelle 9 sitzt. Das zweite Antriebskegelrad 6 ist in Verzahnungseingriff mit einem zweiten Abtriebskegelrad 8, welches drehfest auf einer zweiten Knoterhakenwelle 10 sitzt. Die erste Knoterhakenwelle 9 ist um eine erste Knoterhakenachse K1 drehbar am Knoterrahmen 2 gelagert. Die zweite Knoterhakenwelle 10 ist um eine zweite Knoterhakenachse K2 am Knoterrahmen 2 drehbar gelagert. Die beiden Knoterhakenachsen K1, K2 sind parallel zueinander ausgerichtet und schneiden die Längsachse L in einem rechten Winkel. Denkbar sind auch andere Anordnungen, bei denen die Knoterhakenachsen K1, K2 die Längsachse mit Abstand kreuzen und gegebenenfalls nicht im rechten Winkel zur Längsachse L angeordnet sind. Die Knoterhakenachsen K1, K2 müssen auch nicht zwingend parallel zueinander angeordnet sein.

Die erste Knoterhakenwelle 9 weist zur Bildung eines Knotens in einem Garnstrang an ihrem Ende einen ersten Knoterhaken 11 auf. Dieser umfasst ein erstes Hakenteil 13, welches seitlich von der ersten Knoterhakenwelle 9 vorsteht. Hierzu ist in allgemein bekannter Form eine erste Knoterzunge 15, ebenfalls seitlich vorstehend, verstellbar angeordnet, um einen Garnstrang zwischen dem ersten Hakenteil 13 und der ersten Knoterzunge 15 einzuklemmen. Die zweite Knoterhakenwelle 10 trägt an ihrem Ende identisch zur ersten Knoterhakenwelle 9 einen zweiten Knoterhaken 12, mit einem seitlich vorstehenden zweiten Hakenteil 14 und einer hierzu beweglichen zweiten Knoterzunge 16. Die beiden Knoterhaken 11, 12 können identisch ausgebildet sein oder, vorzugsweise, spiegelsymmetrisch zu der Symmetrieebene, die senkrecht zur Längsachse L angeordnet ist. Zum Antreiben der beiden Knoterzungen 15, 16 ist eine erste Knoterhakensteuerkurve 17 vorgesehen, welche ortsfest zum Knoterrahmen 2 angeordnet ist und eine Außenumfangsfläche aufweist, die um die erste Knoterhakenachse K1 verläuft. Gegen die erste Knoterhakensteuerkurve 17 ist die erste Knoterzunge 15 mit einer ersten Knoterzungenrolle 19 radial abgestützt und gegen diese federbeaufschlagt. Die erste Knoterhakensteuerkurve 17 weist einen Verlauf um die erste Knoterhakenachse K1 auf, welche von einer Kreisbahn abweicht, so dass bei einem Drehen der ersten Knoterhakenwelle 9 somit über die Hebelwirkung in bekannter Weise die erste Knoterzunge 15 gegenüber dem ersten Hakenteil 13 geöffnet und geschlossen wird. Analog hierzu ist zum Steuern der zweiten Knoterzunge 16 eine zweite Knoterhakensteuerkurve 18 vorgesehen, gegen welche sich die zweite Knoterzunge 16 mit einer zweiten Knoterzungenrolle 20 abstützt. Die beiden Knoterhakensteuerkurven 17, 18 sind hierbei ebenfalls spiegelsymmetrisch zu der Symmetrieebene, welche senkrecht zur Längsachse L angeordnet ist, ausgebildet.

Durch die spiegelsymmetrische Anordnung der beiden Antriebskegelräder 5, 6 werden die beiden Knoterhakenwellen 9, 10 gegensinnlich zueinander angetrieben. Da die beiden Knoterhakensteuerkurven 17, 18 ebenfalls spiegelsymmetrisch ausgebildet sind, öffnen die beiden Knoterhaken 11, 12 zum gleichen Zeitpunkt.

Zwischen den beiden Knoterhakenwellen 9, 10 ist ein Reservehalter 21 angeordnet, der in Form eines Hebelarms ausgebildet ist und um eine erste Schwenkachse S1 schwenkbar am Knoterrahmen 2 gelagert ist. Die erste Schwenkachse S1 ist parallel zur Längsachse L angeordnet. Für den Antrieb des Reservehalters 21 ist ein Hebel 22 vorgesehen, der um eine zweite Schwenkachse S2 schwenkbar am Knoterrahmen 2 gelagert ist, wobei die zweite Schwenkachse S2 parallel zur Längsachse L angeordnet ist. Der Hebel 22 stützt sich über ein Steuerelement in Form einer Rolle 23 gegen eine Steuerkurve 24 ab, wobei die Steuerkurve 24 um die Längsachse L verläuft und mit der Zwischenwelle 3 umläuft. Die Steuerkurve 24 weist einen von einer Kreisbahn abweichenden Verlauf auf, so dass gemäß Figur 1 der Hebel 22 angehoben und abgesenkt werden kann. An dem Hebel 22 ist eine Koppelstange 25 schwenkbar befestigt, welche andererseits schwenkbar am Reservehalter 21 befestigt ist, so dass die Bewegung des Hebels 22 eine Bewegung des Reservehalters 21 bewirkt.

An einem unteren Ende weist der Reservehalter 21 einen Hakenabschnitt 26 auf, mit dem ein Garnstrang erfasst und in der in Figur 1 dargestellten Orientierung des Garnknoters 1 nach hinten gezogen werden kann, um eine Garnreserve zur Bildung von Garnknoten zu bilden. Der Hakenabschnitt 26 ist mittig in einer Ebene, die senkrecht zur ersten Schwenkachse S1 angeordnet ist, geschlitzt. Beim Zurückschwenken des Reservehalters 21 überstreift der Hakenabschnitt 26 ein klappbares Messer 27. Das Messer 27 ist um eine dritte Schwenkachse S3 schwenkbar am Knoterrahmen 2 befestigt, wobei die dritte Schwenkachse S3 parallel zur Längsachse L angeordnet ist. Beim Zurückbewegen des Reservehalters 21 aus den in Figur 1 dargestellten Ausgangspositionen stößt ein Garnstrang, der vom Reservehalter 21 nach hinten gezogen wird, gegen einen Messerrücken 28 des Messers 27, wobei der Messerrücken 28 einer Schneide 29 des Messers abgewandt ist. Hierbei wird das Messer 27 aus der in Figur 1 dargestellten Ausgangsposition in eine zurück geklappte Position verstellt, bis der Garnstrang das Messer 27 passiert hat. Hiernach wird das Messer 27 federbelastet in die in Figur 1 dargestellte Ausgangsposition zurückgeschwenkt. Beim Zurückbewegen des Reservehalters 21 in seine Ausgangsposition stößt der Garnstrang gegen die Schneide 29 des Messers 27 und wird durchtrennt.

An dem Knoterrahmen 2 sind zudem zwei Garnriegel 30, 30' vorgesehen, wobei im Folgenden der Garnriegel 30 für den ersten Knoterhaken 11 exemplarisch erläutert wird. Der Garnriegel 30' für den zweiten Knoterhaken 12 ist entsprechend aufgebaut. Der Garnriegel 30 ist um eine Riegelachse R schwenkbar am Knoterrahmen 2 befestigt. Die Riegelachse R ist hierbei winklig zur ersten Knoterhakenachse K1 angeordnet, wobei im vorliegenden Fall der Winkel von einem rechten Winkel abweicht. Der Garnriegel 30 dient, wie bei Garnknotern zum Stand der Technik, dazu, einen Garnstrang an den ersten Knoterhaken 11 anzudrücken, um einen Knoten bilden zu können. Hierbei wird der Garnriegel 30 im Verlauf der Knotenbildung gegen den Garnstrang geschwenkt. Zum Antreiben des Garnriegels 30 ist ein weiterer Hebel 31 vorgesehen, der um die zweite Schwenkachse S2 schwenkbar am Knoterrahmen 2 gelagert ist. Der Hebel 31 stützt sich über ein Steuerelement in Form einer Rolle 32 gegen eine Steuerkurve 33 ab, wobei die Steuerkurve 33 an der Zwischenwelle 3 drehfest angeordnet ist und einen Verlauf aufweist, der von einer Kreisbahn abweicht, so dass der Hebel 31 bei einer Drehung der Zwischenwelle 3 bewegt wird. An dem Hebel 31 ist eine Koppelstange 34 schwenkbar befestigt, die andererseits schwenkbar am Garnriegel 30 befestigt ist, so dass die Bewegung des Hebels 31 auf den Garnriegel 30 übertragen wird.

Ferner ist eine Umlenkvorrichtung 35 vorgesehen. Diese umfasst einen Schwenkarm 36, welcher um die zweite Schwenkachse S2 schwenkbar am Knoterrahmen 3 befestigt ist. Der Schwenkarm 36 stützt sich über ein Steuerelement in Form einer Rolle 37 gegen eine Steuerkurve 38 der Zwischenwelle 3 ab. Die Steuerkurve 38 weist ebenfalls einen Verlauf auf, der von einer Kreisbahn abweicht, so dass durch Drehen der Zwischenwelle 3 der Schwenkarm 36 um die zweite Schwenkachse S2 geschwenkt wird. An einem nach vorne gerichteten Abschnitt des Schwenkarms 36 ist eine Umlenkrolle 39 drehbar gelagert, mit deren Hilfe ein Garnstrang, wie noch später erläutert wird, umgelenkt werden kann und durch die schwenkbare Anordnung des Schwenkarms 36 kann die Umlenkrolle 39 in den Bereich eines Garnstrangs eingeschwenkt werden bzw. aus diesem Bereich herausgeschwenkt werden.

Nach unten weist der Garnknoter 1 einen Bügel 40 auf, der Teil des Knoterrahmens 2 ist. An dem Bügel 40 sind die Garnriegel 30, 30' schwenkbar befestigt. Der Bügel 40 dient auch als Befestigungselement des gesamten Garnknoters 1 auf einer Presse und hat auch die Funktion eines Schutzbügels für die Knoterhaken 11, 12.

Der Garnknoter 1 ist somit mit seinem Knoterrahmen 2 als eigenständige Baueinheit ausgebildet, wobei alle Funktionsbauteile des Garnknoters 1 an dem Knoterrahmen 2 befestigt bzw. gelagert sind. Insbesondere die Lagerung der Garnriegel 30, 30' an dem Knoterrahmen 2 stellen eine Konstruktion dar, die die Synchronisation der Garnriegel 30, 30' an den Knoterablauf besonders einfach gestalten. Der gesamte Garnknoter 1 lässt sich über den Knoterrahmen 2 an einer Presse befestigen, wobei der Welleneingang 4 der Zwischenwelle 3 mit einer Knoterantriebswelle einer Presse verbunden werden kann. Auf der Knoterantriebswelle der Presse selbst und auch an der Presse bzw. dessen Rahmen sind keine weiteren Funktionsbauteile des Garnknoters mehr vorhanden, so dass bei einem Defekt der gesamte Garnknoter 1 als Baueinheit demontiert werden kann, ohne dass hiervon weitere vorhandene Garnknoter an derselben Presse bzw. Garnknoter, die durch dieselbe Knoterantriebswelle angetrieben werden, beeinflusst werden. Eine weitere Demontage der anderen Garnknoter ist nicht erforderlich.

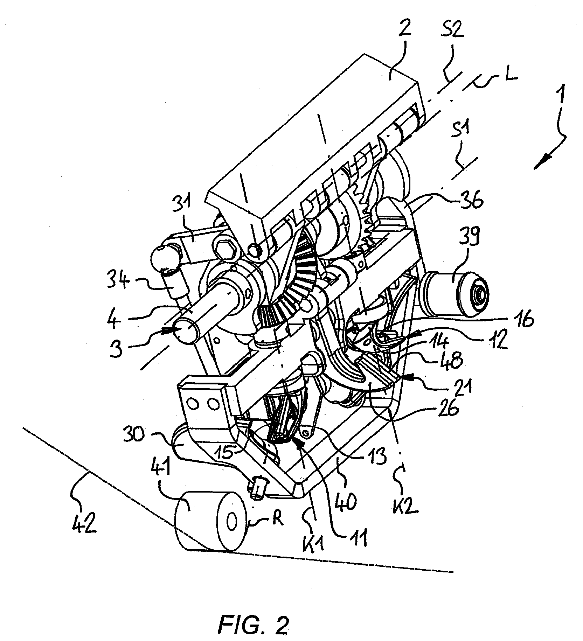

Im Folgenden wird anhand der Figuren 2 bis 8 der generelle Ablauf des Bindens zweier Knoten beschrieben, wobei zur Vereinfachung nur der Garnknoter mit den Garnsträngen dargestellt ist. Die weiteren Bauteile sind zur Vereinfachung zunächst nicht dargestellt.

Generell ist der in den Figuren 2 bis 8 dargestellte Garnknoter 1, der dem Garnknoter gemäß Figur 1 entspricht, auf einer Presse, z.B. einer Ballenpresse aus dem landwirtschaftlichen Bereich, angeordnet, wie dies z.B. auch in der WO 2011/054360 A1 dargestellt ist. Der Garnknoter 1 ist derart ausgerichtet, dass die Längsachse L in Fahrtrichtung (F) ausgerichtet ist, wobei eine Umlenkrolle 41 das vom Ballen kommende Garn zum Garnknoter umlenkt.

Vor dem Binden von Knoten stehen die Knoterhaken 11, 12 in einer in Figur 2 dargestellten Ausgangsstellung. Die Knoterzungen 15, 16 sind in einer geschlossenen Position. Die Knoterhaken 11, 12 zeigen, bezogen auf die bereits oben erwähnte Symmetrieebene, welche senkrecht zur Längsachse L angeordnet ist, nach außen voneinander weg, d.h. der erste Knoterhaken 11 weist in Richtung zur Umlenkrolle 41 und der zweite Knoterhaken 12 in Richtung zur Umlenkrolle 39. Die Umlenkrolle 39 ist mittels des Schwenkarms 36 in eine vordere Position in den Bereich der Garnstrangführung geschwenkt. Ebenso ist der Reservehalter 21 in eine vordere Position geschwenkt, in der sich der Hakenabschnitt 26 des Reservehalters 21 ebenfalls im Führungsbereich der Garnstränge befindet. In diesem Zusammenhang bedeutet "nach vorne" geschwenkt, dass sich die Bauteile, d.h. die Umlenkrolle 39 und der Hakenabschnitt 26 des Reservehalters 21 zur rechten Seite in der Darstellung gemäß Figur 2 geschwenkt sind.

Ein oberer Garnstrang 42 ist, in der Darstellung gemäß Figur 2, von einer nicht dargestellten Garnrolle über bekannte ebenfalls nicht dargestellte Spann- und Bremsvorrichtungen von links oben kommend um die Garnumlenkrolle nach unten rechts zu einer Oberseite eines Ballens geführt.

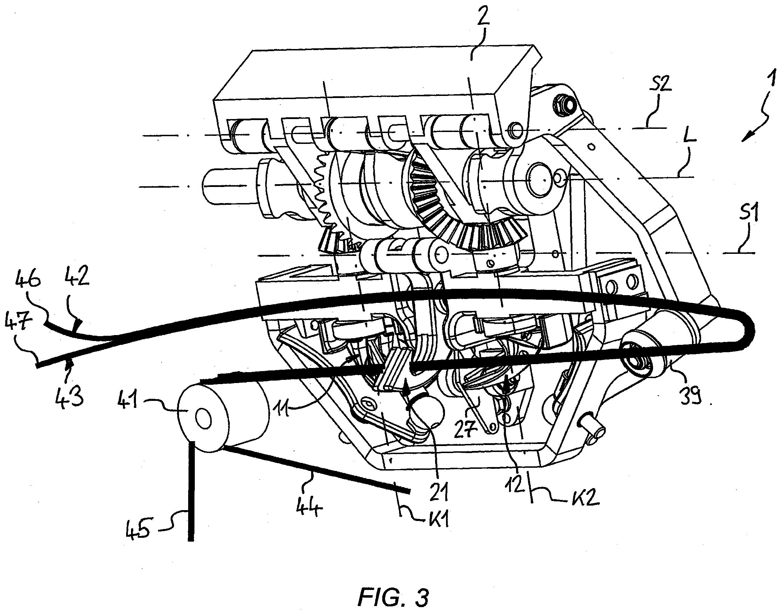

In einem ersten Verfahrensschritt wird nach dem Auslösen des Bindevorgangs eine Bindenadel, wie später noch dargestellt, in Bewegung gesetzt, die einen unteren Garnstrang 43 nach oben bewegt. Der untere Garnstrang 43 verläuft von einer unteren Garnrolle über nicht dargestellte bekannte Spann- und Bremsvorrichtungen zu einer Unterseite des Ballens. Bei der Aufwärtsbewegung der Bindenadel ergreift diese den oberen Garnstrang 42 und überführt beide Garnstränge 42, 43 zusammen in den Knoterbereich. Die Bindenadel bewegt sich in diesem Bereich entgegen der Fahrtrichtung und passiert zunächst die Umlenkrolle 41, dann den ersten Knoterhaken 11, dann den Hakenabschnitt 26 des Reservehalters 21, dann den zweiten Knoterhaken 12 und zum Schluss die Umlenkrolle 39. Hiernach liegen beide Garnstränge 42, 43 mit ihren zum Ballen führenden Enden 44, 45 um die Umlenkrolle 41 und liegen auf den Knoterzungen 15, 16 der Knoterhaken 11, 12 sowie auf dem Hakenabschnitt 26 des Reservehalters 21 auf. Die Garnriegel 30, 30' befinden sich noch in ihrer Ausgangsstellung außerhalb des Führungsbereichs der Garnstränge 42, 43. Die Umlenkrolle 39 wurde mittels des Schwenkarms 36 aus dem Führungsbereich der Garnstränge 42, 43 nach hinten weggeschwenkt, so dass die Garnstränge 42, 43 nicht auf der Umlenkrolle 39 liegen. Die Knoterhakenwellen 9, 10 wurden gedreht bis zu einer Position, in der die Knoterhaken 11, 12 einander zugewandt sind und in den Führungsbereich der Garnstränge 42, 43 hineinragen. Hierbei wurde der erste Knoterhaken 11 von oben betrachtet im Uhrzeigersinn gedreht und der zweite Knoterhaken 12 von oben betrachtet entgegen dem Uhrzeigersinn gedreht (Figur 3).

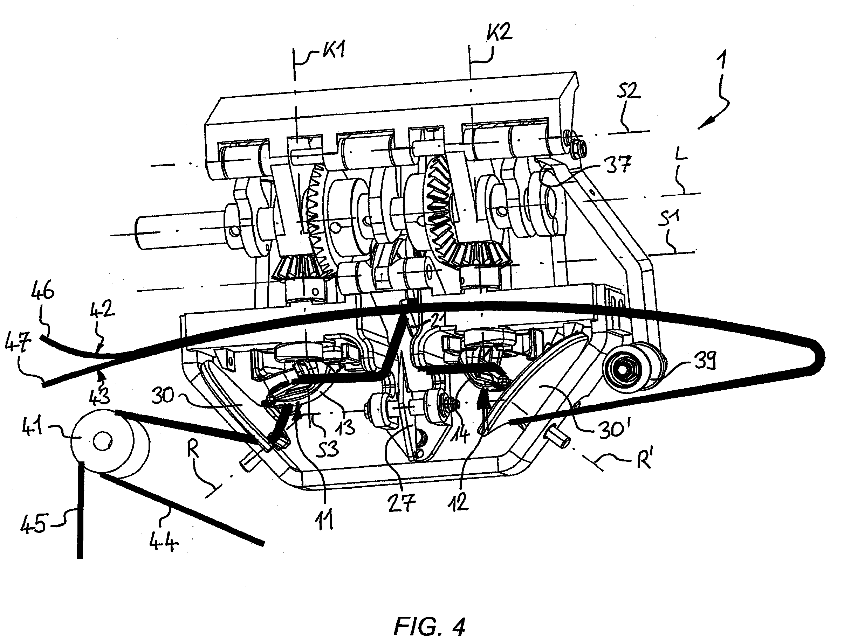

Figur 4 zeigt den Garnknoter 1, wenn die Bindenadel annähernd ihre oberste Position erreicht hat. Die Garnriegel 30, 30' sind in den Führungsbereich der Garnstränge 42, 43 hineingeschwenkt und drücken die Garnstränge nach unten, so dass sie auf den Knoterhaken 11, 12 gehalten sind. Hierbei werden die Garnstränge 42, 43 außerhalb des Schwenkbereichs der Hakenteile 13, 14 der Knoterhaken 11, 12 nach unten gedrückt, um ein sicheres Eingreifen der Garnstränge 42, 43 durch die Knoterhaken 11, 12 bei der weiteren Drehung derselben zu gewährleisten. Ferner ist der Reservehalter 21 nach hinten in eine zurückgezogene Position geschwenkt und hat eine Garnreserve zwischen den beiden Knoterhaken 11, 12 gezogen. Die am Reservehalter 21 gehaltenen Garnstränge 42, 43 wurden dabei über das gegen die Federkraft ausweichende Messer 27, wie oben beschrieben, gezogen. In den zwischen dem Garnriegel 30' am zweiten Knoterhaken 12 und der Bindenadelspitze aufgespannten Freiraum wird die Umlenkrolle 39 in eine vordere Position hineingeschwenkt, bis die Position gemäß Figur 4 erreicht ist. Darüber hinaus wurden die Knoterhaken 11, 12 weiter, im selben Drehsinn wie oben beschrieben, gedreht und befinden sich annähernd wieder in der Ausgangsstellung.

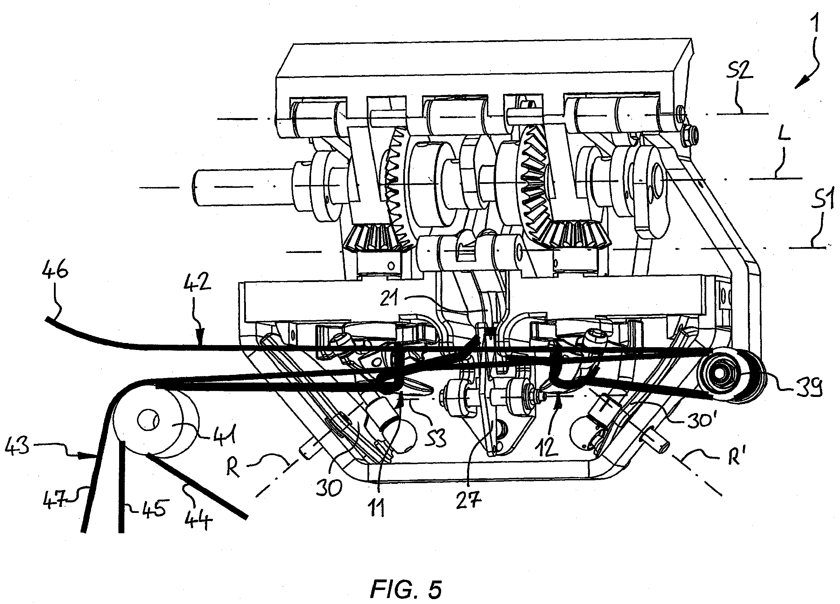

In Figur 5 ist die Bindenadel wieder aus dem Knoterbereich herausgeschwenkt. Dabei wurden die zu den Garnrollen führenden Enden 46, 47 der Garnstränge 42, 43 oben auf die Umlenkrolle 39 abgelegt. Der untere Garnstrang 43 ist nun zudem um die Umlenkrolle 41 umgelenkt. Die zum Ballen führenden Enden 44, 45 der beiden Garnstränge 42, 43 verlaufen von der Umlenkrolle 41 vorbei am wieder in seiner Ausgangsstellung befindlichen Garnriegel 30 zum ersten Knoterhaken 11 und von da aus zum Reservehalter 21 weiter zum zweiten Knoterhaken 12 und von dort zur Umlenkrolle 39.

Die Knoterhaken 11, 12 haben die Garnstränge 42, 43 um sich gewickelt und greifen mit den nun geöffneten Knoterzungen 15, 16 über die jeweils zum Reservehalter 21 laufenden Enden. Der Reservehalter 21 bewegt sich hierbei kontinuierlich entsprechend der Drehung der Knoterhaken 11, 12 zurück in die vordere Position und gibt somit sukzessive Garnreserve frei, die die Knoterhaken 11, 12 benötigen, um die Garnstränge 42, 43 aufzuwickeln.

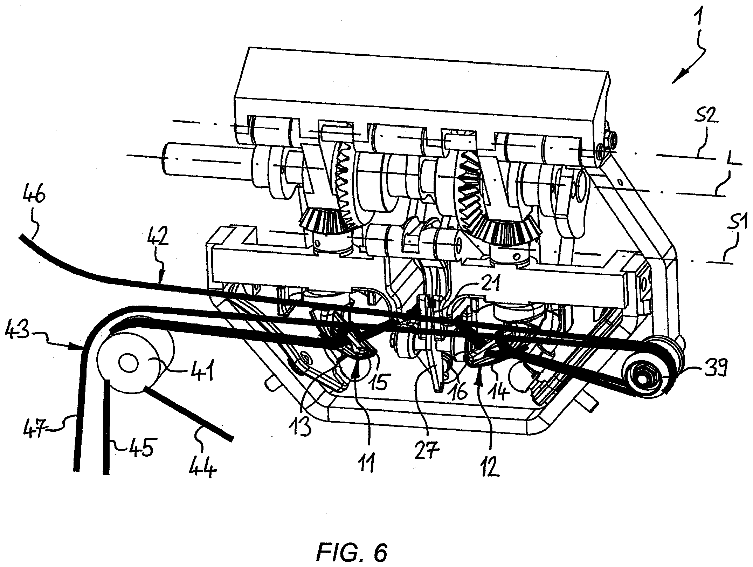

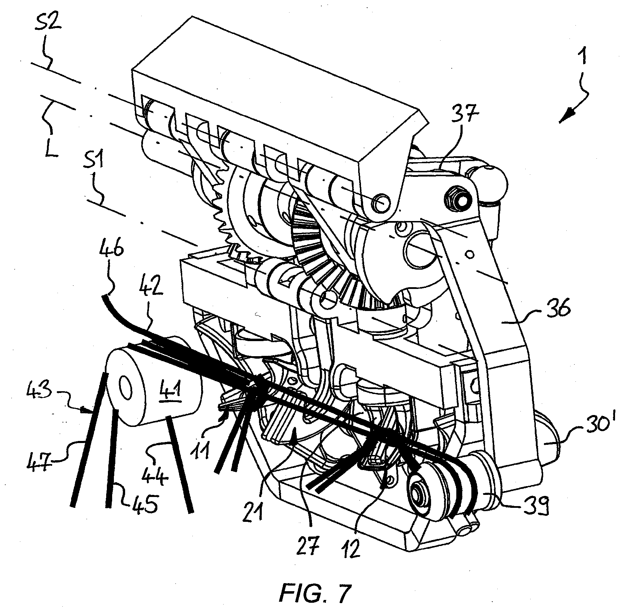

Im nächsten Schritt (Figur 6) sind die Knoterhaken 11, 12 weiter gedreht, wobei die Knoterzungen 15, 16 in ihre geschlossene Position überführt wurden. Die Garnstränge 42, 43 sind nun jeweils zwischen den Knoterzungen 15, 16 und den Hakenteilen 13, 14 eingeklemmt. Der Reservehalter 21 ist noch weiter nach vorne geschwenkt, um mehr Garnreserve freizugeben, und hat die Garnstränge 42, 43 vor die Schneide 29 des Messers 27 bewegt. Bei der weiteren Drehung der Knoterhaken 11, 12 wird auch der Reservehalter 21 weiter nach vorne geschwenkt. Dabei werden die Garnstränge 42, 43 mittels des Messers 27 durchtrennt (Figur 7).

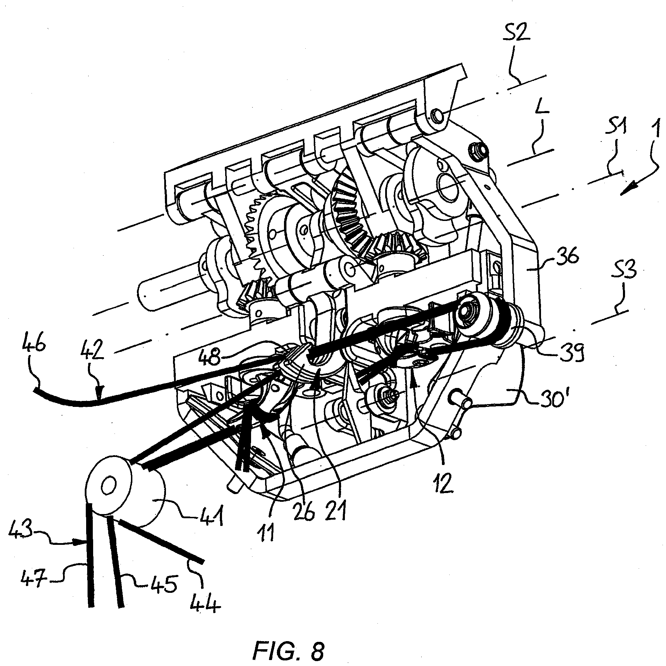

Die Knoterhaken 11, 12 werden dann weiter gedreht, bis diese wieder ihre Ausgangsstellung erreicht haben (Figur 8). In dieser Stellung hat auch der Reservehalter 21 wieder seine vordere Ausgangsposition erreicht. Der Reservehalter 21 übernimmt bei einem Schwenken in die vordere Position die zu den Garnrollen führenden Enden 46, 47 der beiden Garnstränge 42, 43, die im in Figur 8 rechten Knoterbereich über die Umlenkrolle 39 zum zweiten Knoterhaken 12 verlaufen. Die Garnstränge 42, 43 werden über vordere Schrägen 48 am Hakenabschnitt 26 des Reservehalters 21 bei der Vorwärtsbewegung desselben angehoben, bis diese in den Hakenabschnitt 26 springen.

Die Drehung der Knoterhaken 11, 12 ist somit abgeschlossen. Im weiteren Verlauf des Pressens der Ballen werden die fertigen Ballen und die Startkante des neuen Ballens weiter durch den Presskanal unterhalb des Garnknoters 1 geschoben. Daraus resultiert eine Kraft auf die Garnstränge 42, 43. Durch diese Kräfte in den Garnsträngen 42, 43 wird der Knoten vom ersten Knoterhaken 11 abgezogen und geformt. Ebenso geschieht dies am zweiten Knoterhaken 12, wobei hier die Garnstränge 42, 43 um die Umlenkrolle 39 umgelenkt sind, so dass der Knoten vom zweiten Knoterhaken 12 abgezogen werden kann, auch wenn dieser in die entgegengesetzte Richtung des ersten Knoterhakens 11 ausgerichtet ist.

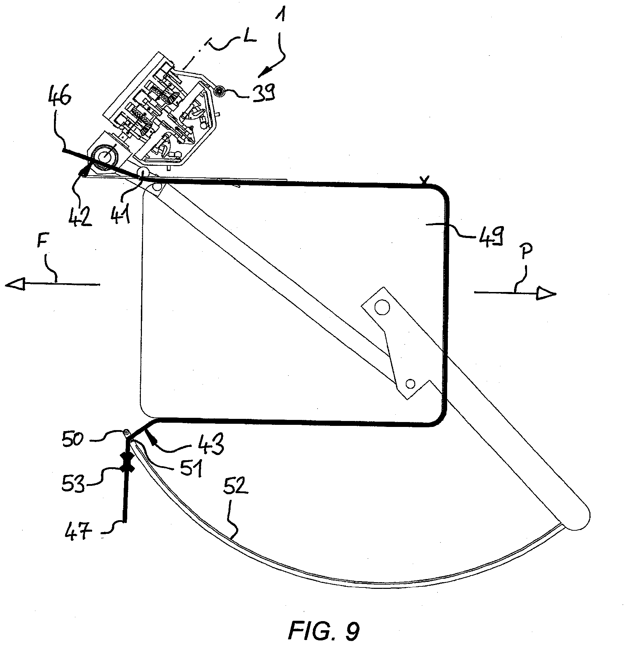

Im Folgenden wird anhand der Figuren 9 bis 16 der Bindeablauf anhand von schematischen Darstellungen der gesamten Bindeeinrichtung einer Ballenpresse unter Verwendung einer Bindenadel mit zwei Rollen dargestellt. Auf bekannte Elemente zur Garnführung, Garnspannung und Garnbremsung wurde in den Darstellungen der Übersichtlichkeit halber verzichtet.

Figur 9 zeigt die Ausgangsstellung der Bindeeinrichtung. Der obere Garnstrang 42 verläuft von der (nicht dargestellten) oberen Garnrolle über die Umlenkrolle 41 zu der Oberseite eines Ballens 49. Der Ballen 49 wird in Richtung des Pfeils P, der die Pressrichtung anzeigt, gepresst und ausgeworfen. Der Pfeil F gibt die Fahrtrichtung der Ballenpresse an, auf den sich die Begriffe "vorne" und "hinten" beziehen. Nahe einer hinteren Kante des Ballens 49 ist der obere Garnstrang 42 mit einem unteren Garnstrang 43 verknotet. Der untere Garnstrang 43 verläuft an der hinteren Seite des Ballens 49 entlang nach unten und entlang der Ballenunterseite nach vorne, wo er zwischen zwei Rollen 50, 51 der Bindenadel 52 verläuft. Von da aus verläuft er weiter durch eine optional vorhandene schaltbare Garnklemme 53 über Fadenführungen zu einer unteren Garnrolle (nicht dargestellt).

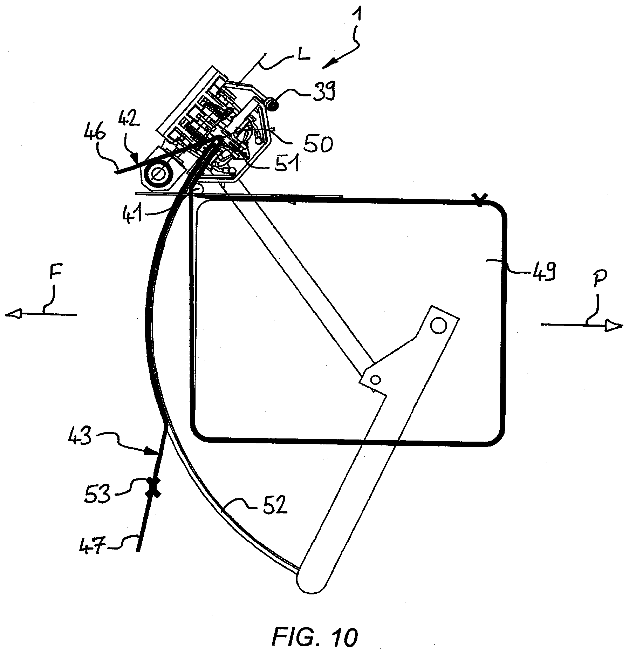

Nach dem Auslösen der Bindung ist, wie in Figur 10 dargestellt, die Bindenadel 52 durch den Presskanal, durch den der Ballen 49 gepresst wird, und hier nicht explizit dargestellt ist, geschwenkt und hat dabei den unteren Garnstrang 43 nach oben überführt. Oberhalb des Presskanals, d.h. oberhalb des Ballens 49, hat die Bindenadel 52 mit ihrer vorderen Rolle 50 den oberen Garnstrang 42 erfasst und bewegt beide Garnstränge 42, 43 in den Knoterbereich. Die Knoterelemente, d.h. Garnriegel 30, 30' und Reservehalter 21, sind noch in ihrer Ausgangsposition. Lediglich die Knoterhaken 11, 12 sind in eine Garnübernahmeposition verdreht.

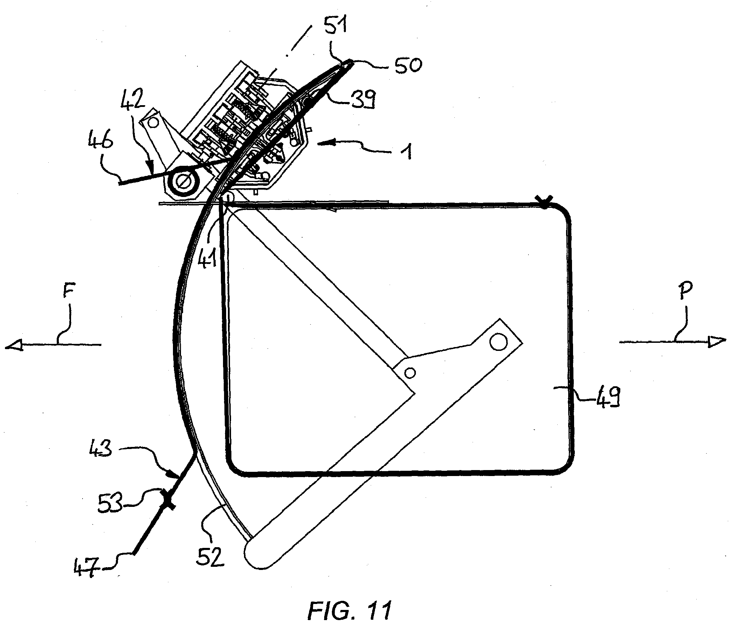

In Figur 11 befindet sich die Bindenadel 52 nahezu in ihrer obersten Position. Die Lage der Garnstränge 42, 43 im Knoterbereich und die Positionierung der Knoterelemente entsprechen der Darstellung gemäß Figur 3.

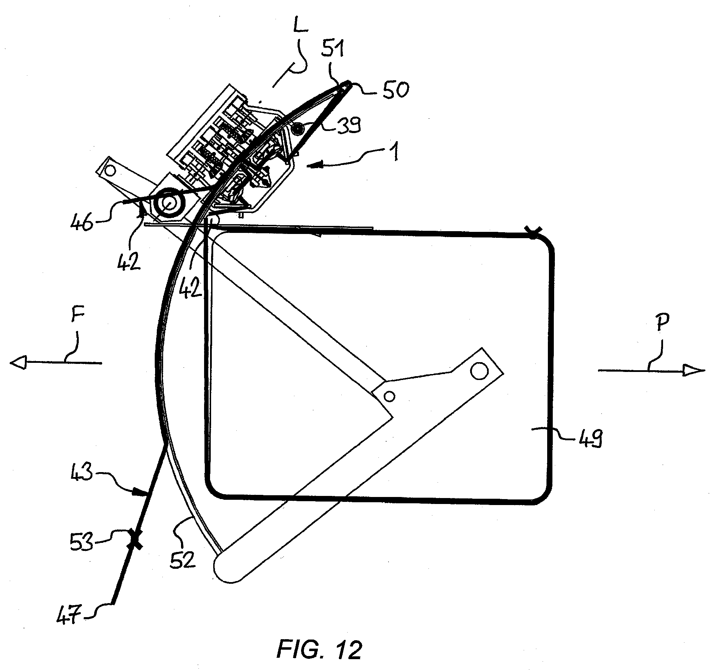

Figur 12 zeigt die Gesamtdarstellung der Bindeeinrichtung, die der Position in Figur 4 entspricht.

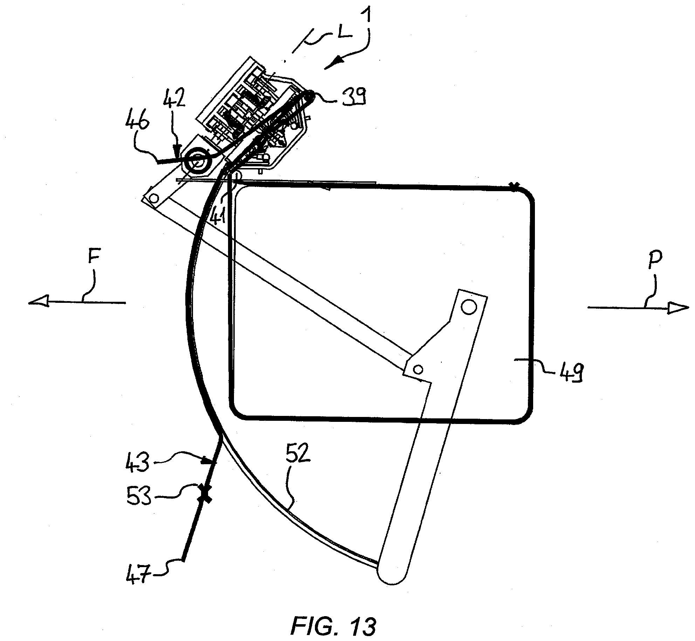

Figur 13 entspricht in ihrer Position der Figur 5. Es ist zu erkennen, dass die Bindenadel 52 den Knoterbereich wieder verlassen hat, dabei den oberen Garnstrang 42 freigegeben hat und den unteren Garnstrang 43 auf die Umlenkrolle 39 abgelegt hat.

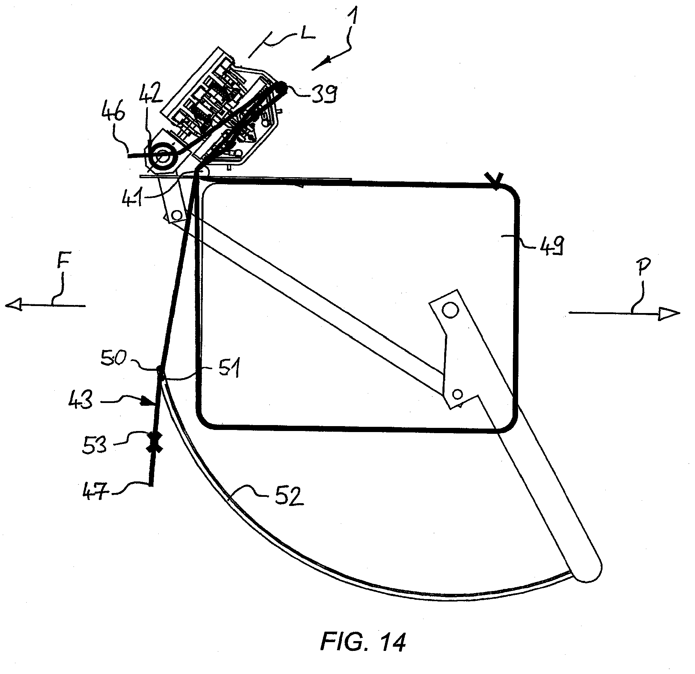

In Figur 14 ist der Hub der Bindenadel 52 annähernd abgeschlossen. Die Position des Garnknoters 1 entspricht der gemäß Figur 6.

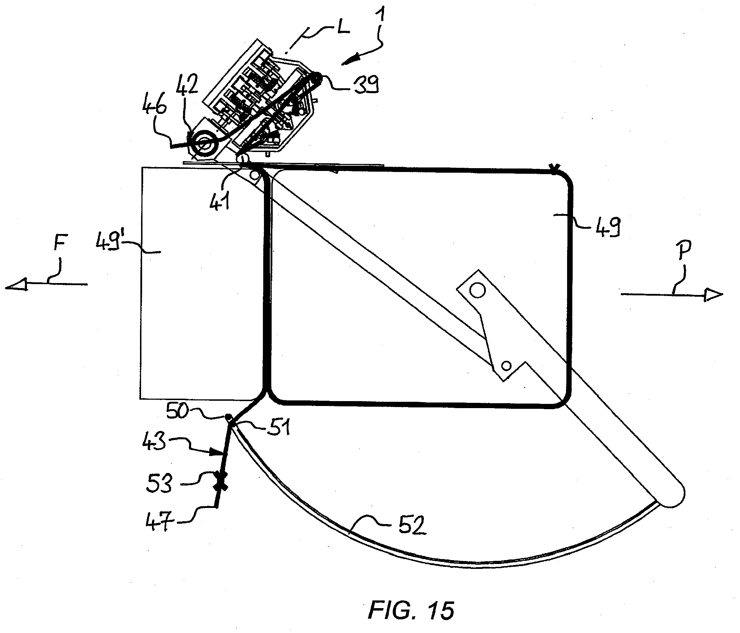

Figur 15 zeigt die gesamte Bindeeinrichtung nach Beendigung des Bindevorgangs. Die Bindenadel 52 befindet sich wieder in ihrer Ausgangsstellung, ebenso wie die Knoterhaken 11, 12 des Garnknoters 1. Die Knoten sind jedoch noch auf den Knoterhaken 11, 12 angeordnet. Die Position entspricht der Darstellung gemäß Figur 8.

Im weiteren Verlauf des Pressvorgangs werden die Garnstränge 42, 43 zwischen dem hinteren fertigen Ballen 49 und den neuen Ballen 49' eingepresst. Beim Weiterschieben der Ballen 49, 49' ziehen die Garnstränge 42, 43 den Knoten vom ersten Knoterhaken 11. Durch das Einpressen des unteren Garnstrangs 43 zwischen den beiden Ballen 49, 49' wird beim Weiterschieben der Ballen 49, 49' der untere Garnstrang 43 auf Zug beansprucht, wobei dieser über die Umlenkrolle 41 und die Umlenkrolle 39 den Knoten vom zweiten Knoterhaken 12 abzieht.

Für den Fall, dass die Einpresskraft zwischen den Ballen 49, 49' nicht ausreicht, um den zweiten Knoten vom zweiten Knoterhaken 12 abzuziehen, was z.B. bei sehr losem Pressen auftreten kann, kann mit einer schaltbaren Garnklemme 53 der untere Garnstrang 43 direkt nach Ende der Bewegung der Bindenadel 52 blockiert werden. Somit wird der gesamte Garnnachzug, der beim Verschieben der Ballen 49, 49' im Presskanal erforderlich ist, an dem oberen Garnstrang 42 wirksam und zieht den zweiten Knoten ab. Danach wird die Garnklemme 53 wieder gelöst und es können beim weiteren Pressen beide Garnstränge 42, 43 abgezogen werden.

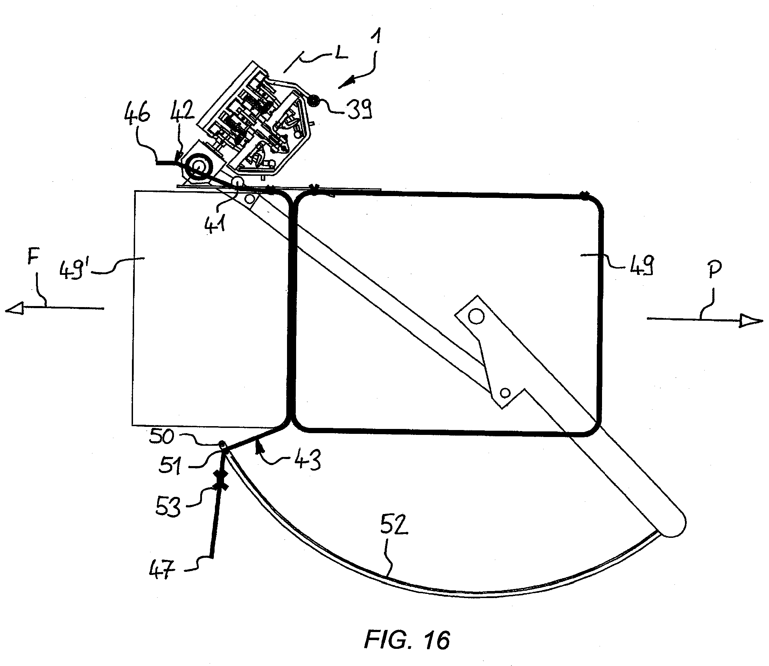

Der Zustand nach dem Abziehen der Knoten ist in Figur 16 dargestellt.

Der zweite Knoten wird nur durch den unteren Garnstrang 43 vom zweiten Knoterhaken 12 abgezogen, da bei dem beschriebenen Bindeablauf der Knotenabzug nur durch die Ballenbewegung im Presskanal erfolgt und der obere Garnstrang 42 nach dem Bindevorgang von dieser Seite keine Zugkraft erhält. Daher erscheint es notwendig, zumindest eine ausreichende Zugkraft vom unteren Garnstrang 43 bereitzustellen, die unabhängig von der Pressdichte zur Verfügung gestellt wird. Eine verhältnismäßig einfache Maßnahme stellt die oben beschriebene schaltbare Garnklemme 53 dar. Alternativ sind auch aktive Vorrichtungen denkbar, die direkt Zug auf den oberen Garnstrang 42 ausüben.

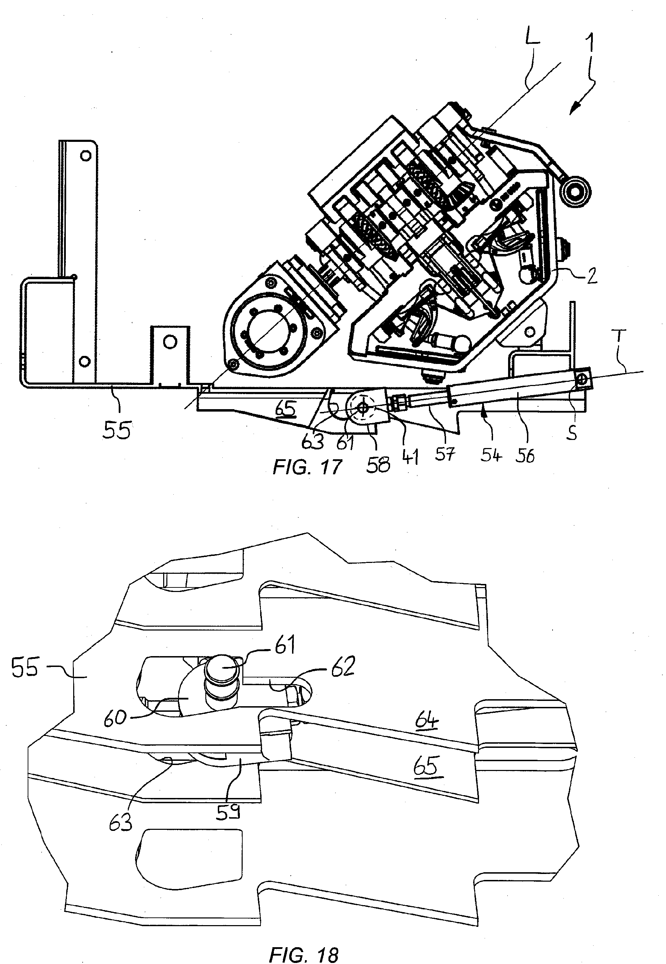

Figur 17 zeigt eine Seitenansicht einer erfindungsgemäßen Garnknoteranordnung mit einem Garnknoter 1 nach den Figuren 1 bis 16. Grundsätzlich kann jedoch auch ein anderer Garnknoter verwendet werden. Die Darstellung ist diesbezüglich nur beispielhaft.

Der Garnknoter 1 ist mit seiner Knoterrahmen an einem an einem Rahmen 55 der Garnknoteranordnung befestigt. In dem gezeigten Ausführungsbeispiel sind mehrere Garnknoter 1 nebeneinander angeordnet und mit demselben Rahmen 55 verbunden.

Die Umlenkrolle 41 des Garnknoters 1 dient zum Umlenken des vom Ballen kommenden Garns in Richtung zum Garnknoter 1, wie dies zum Beispiel in Figur 3 dargestellt ist. Die Umlenkrolle 41 ist über einen Rollenhalter 58 mit einer längenveränderlichen Verstelleinrichtung 54 verbunden. Die Verstelleinrichtung 54 ist um eine Schwenkachse S schwenkbar am Rahmen 55 gelagert. Die Verstelleinrichtung 54 ist in Form einer teleskopierbaren Stange ausgebildet und weist hierzu ein Zylinderrohr 56 und eine darin, entlang einer Teleskopachse T, geführte Zylinderstange 57 auf. An einem dem Zylinderrohr 56 abgewandten Ende trägt die Zylinderstange 57 einen Rollenhalter 58. Der Rollenhalter 58 ist U-förmig gestaltet und nimmt die Umlenkrolle 41 zwischen zwei Gabelarmen 59, 60 auf. An dem Rollenhalten 58 sind nach außen vorstehende Führungszapfen 61 vorgesehen, von denen nur einer in den Figuren sichtbar ist. Die Führungszapfen 61 stehen in entgegengesetzte Richtungen vom Rollenhalter 58 vor und sind jeweils mit einem der Gabelarme 59, 60 verbunden.

Die Führungszapfen 61 sind jeweils in einer Führungsnut 62, 63 des Rahmens 55 translatorisch bewegbar geführt. Die Führungsnuten 62, 63 sind jeweils in einer Führungswand 64, 65 des Rahmens 55 angeordnet. Der Rahmen 55 ist in dem gezeigten Beispiel aus Blechmaterial gefertigt, wobei die Führungswände 64, 65 aus dem Blechmaterial umgeformt sind.

Die Führungsnuten 62, 63 sind in etwas parallel zur Pressrichtung ausgerichtet, wobei die Teleskopierachse T einen Winkel zu den Führungsnuten 62, 63 einschließt. Beim Verschieben des Rollenhalters 58 entlang der Führungsnuten 62, 63 ergibt sich demnach eine Schwenkbewegung des Verstelleinrichtung 54 um die Schwenkachse S.

Die Verstelleinrichtung 54 kann hierbei in Form eines Druckfederelements oder einer Gasdruckfeder ausgebildet sein, wobei die Zylinderstange 57 in Richtung zu einer ausgefahrenen Position relativ zum Zylinderrohr 56 mit Kraft beaufschlagt ist. Bei einer Zugkraft innerhalb des Garns entsteht eine Radialkraft von dem Garn auf die Umlenkrolle 41, so dass die Verstelleinrichtung 54 entgegen der Kraft, die die Zylinderstande 57 in Richtung zur ausgefahrenen Position beaufschlagt, zusammengefahren wird. Hierbei können Federmittel in der Verstelleinrichtung 54 derart vorgespannt sein, dass ein Zusammenfahren der Verstelleinrichtung 54 nicht vor dem Erreichen einer vorbestimmten Grenzkraft erfolgt.

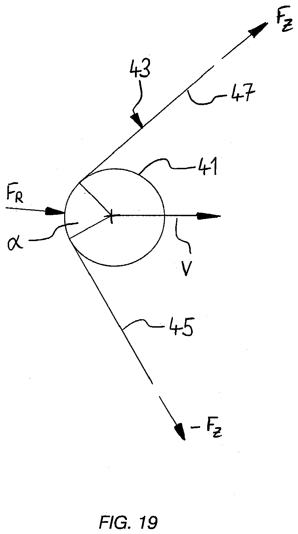

Figur 19 zeigt schematisch die Kräfteverhältnisse an der Umlenkrolle 41 bei einer Garnumschlingung gemäß Figur 3. Der Einfachheit halber ist nur der untere Garnstrang 43, also das zum Ballen führende Ende 45 des unteren Garnstrangs 43 und das zur Garnrolle führende Ende 47 des unteren Garnstrangs 43 dargestellt.

Der untere Garnstrang 43 ist über einen Umschlingungswinkel α um die Umlenkrolle 41 gewunden. Die im unteren Garnstrang 43 vorhandenen Zugkräfte F_{K} führen dazu, dass von dem unteren Garnstrang 43 eine Radialkraft F_{R} auf die Umlenkrolle 41 ausgeübt wird. Diese Radialkraft F_{R} ist der Kraft, mit der die Verstelleinrichtung 54 (Figur 17) zur ausgefahrenen Position beaufschlagt ist, entgegengesetzt, wobei die Umlenkrolle 41 zumindest bei Überschreiten einer Grenzzugkraft in einer Verstellrichtung V, die durch die Führungsnuten 62, 63 (Figur 18) vorgegeben ist, verschoben wird. Durch dieses Verschieben reduziert sich die Zugkraft Fz im unteren Garnstrang 43, so dass eine Überschreitung einer Streckgrenze des Garnmaterials und damit ein Reißen des Garnstrangs vermieden wird.

Ähnliche Verhältnisse stellen sich bei Betrachtung des oberen Garnstrangs 42 ein, wobei die sich aus der Zugkraft im oberen Garnstrang 42 ergebene Radialkraft auf die Umlenkrolle 41 zu der der Radialkraft F_{R}, die sich aus der Zugkraft Fz des unteren Garnstrangs 43 ergibt, hinzuaddiert.

### Bezugszeichenliste

- 1: Garnknoter
- 2: Knoterrahmen
- 3: Zwischenwelle
- 4: Welleneingang
- 5: erstes Antriebskegelrad
- 6: zweites Antriebskegelrad
- 7: erstes Abtriebskegelrad
- 8: zweites Abtriebskegelrad
- 9: erste Knoterhakenwelle
- 10: zweite Knoterhakenwelle
- 11: erster Knoterhaken
- 12: zweiter Knoterhaken
- 13: erstes Hakenteil
- 14: zweites Hakenteil
- 15: erste Knoterzunge
- 16: zweite Knoterzunge
- 17: erste Knoterhakensteuerkurve
- 18: zweite Knoterhakensteuerkurve
- 19: erste Knoterzungenrolle
- 20: zweite Knoterzungenrolle
- 21: Reservehalter
- 22: Hebel
- 23: Rolle
- 24: Steuerkurve
- 25: Koppelstange
- 26: Hakenabschnitt
- 27: Messer
- 28: Messerrücken
- 29: Schneide
- 30, 30': Garnriegel
- 31, 31': Hebel
- 32: Rolle
- 33: Steuerkurve
- 34: Koppelstange
- 35: Umlenkvorrichtung
- 36: Schwenkarm
- 37: Rolle
- 38: Steuerkurve
- 39: Umlenkrolle
- 40: Bügel
- 41: Umlenkrolle
- 42: oberer Garnstrang
- 43: unterer Garnstrang
- 44: zum Ballen führendes Ende des oberen Garnstrangs
- 45: zum Ballen führendes Ende des unteren Garnstrangs
- 46: zur Garnrolle führendes Ende des oberen Garnstrangs
- 47: zur Garnrolle führendes Ende des unteren Garnstrangs
- 48: Anschrägung
- 49, 49': Ballen
- 50: Rolle
- 51, 51': Rolle
- 52, 52': Bindenadel
- 53: Garnklemme
- 54: Verstelleinrichtung
- 55: Rahmen
- 56: Zylinderrohr
- 57: Zylinderstange
- 58: Rollenhalter
- 59: Gabelarm
- 60: Gabelarm
- 61: Führungszapfen
- 62: Führungsnut
- 63: Führungsnut
- 64: Führungswand
- 65: Führungswand

- F: Fahrtrichtung
- F_{R}: Radialkraft
- Fz: Zugkraft im Garn
- K1: erste Knoterhakenachse
- K2: zweite Knoterhakenachse
- L: Längsachse
- P: Pressrichtung
- R, R': Riegelachse
- S1: erste Schwenkachse
- S2: zweite Schwenkachse
- S3: dritte Schwenkachse
- S: Schwenkachse
- T: Teleskopierachse
- V: Verstellrichtung
- α: Umschlingungswinkel

## Patentansprüche

1. Garnknoteranordnung zum Knoten von Garn zum Umschnüren eines Ballens, wobei die Garnknoteranordnung Folgendes aufweist:
einen Garnknoter (1) und
eine Bindenadel (52, 52') zum Zuführen von Garnsträngen in einen Knoterbereich des Garnknoters (1),
**dadurch gekennzeichnet,**
**dass** die Garnknoteranordnung ferner eine relativ zum Garnknoter (1) einstellbare Umlenkrolle (41), über die vom Ballen kommendes Garn (42, 43) in Richtung zum Garnknoter (1) umgelenkt wird, und eine Verstelleinrichtung (54) zum Verstellen der Position der Umlenkrolle (41) in Abhängigkeit der von dem Garn (42, 43) auf die Umlenkrolle (41) ausgeübten Kraft (F_{R}), aufweist.

2. Garnknoteranordnung nach Anspruch 1,
**dadurch gekennzeichnet,**
**dass** die Verstelleinrichtung (54) über ein Federelement, hydraulisch oder pneumatisch verstellbar ist.

3. Garnknoteranordnung nach einem der Ansprüche 1 oder 2,
**dadurch gekennzeichnet,**
**dass** die Garnknoteranordnung einen Rahmen (55) aufweist, an dem die Umlenkrolle (41) translatorisch bewegbar geführt ist,
**dass** die Verstelleinrichtung (54) einerseits am Rahmen (55) gelagert ist und andererseits gegen die Umlenkrolle (41) abgestützt ist, und
**dass** die Verstelleinrichtung (54) in der Länge verstellbar ist.

4. Garnknoteranordnung nach Anspruch 3,
**dadurch gekennzeichnet,**
**dass** die Umlenkrolle (41) an einem Rollenhalter (58) befestigt ist, der mit der Verstelleinrichtung (54) verbunden ist.

5. Garnknoteranordnung nach Anspruch 4,
**dadurch gekennzeichnet,**
**dass** der Rollenhalter (58) seitlich vorstehende Führungszapfen (61) aufweist, die in Führungsnuten (62, 63) des Rahmens (55) geführt sind.

6. Garnknoteranordnung nach einem der Ansprüche 1 bis 5,
**dadurch gekennzeichnet,**
**dass** die Verstelleinrichtung (54) eine teleskopierbare Stange (56, 57) aufweist, die zur Einnahme einer ausgefahrenen Stellung mit Kraft beaufschlagt ist.

7. Garnknoteranordnung nach Anspruch 6,
**dadurch gekennzeichnet,**
**dass** die teleskopierbare Stange (56, 57) zur Einnahme der ausgefahrenen Stellung federbeaufschlagt ist.

8. Garnknoteranordnung nach einem der Ansprüche 1 bis 7,
**dadurch gekennzeichnet,**
**dass** der Garnknoter (1) Folgendes aufweist:
einen Knoterrahmen (2),
eine Zwischenwelle (3), die am Knoterrahmen (2) um eine Längsachse (L) drehbar gelagert ist und die einen Welleneingang (4) zum Verbinden der Zwischenwelle (3) mit einem Abtriebselement (61) einer Knoterantriebswelle (54) aufweist, und
mindestens eine um eine Knoterhakenachse (K1, K2) drehbar am Knoterrahmen (2) gelagerte Knoterhakenwelle (9,10), die mit der Zwischenwelle (3) antriebsverbunden ist und einen Knoterhaken (11, 12) zum Bilden eines Knotens trägt.

9. Garnknoteranordnung nach Anspruch 8,
**dadurch gekennzeichnet,**
**dass** der Garnknoter (1) als eigenständige Baueinheit ausgebildet ist, wobei der Garnknoter (1) über den Welleneingang (4) der Zwischenwelle (3) lösbar mit der Knoterantriebswelle (54) antriebsverbindbar ist.

10. Garnknoteranordnung nach einem der Ansprüche 1 bis 9,
**dadurch gekennzeichnet,**
**dass** zwei Knoterhakenwellen (9, 10) vorgesehen sind, die jeweils um eine Knoterhakenachse (K1, K2) drehbar am Knoterrahmen (2) gelagert sind und die jeweils mit der Zwischenwelle (3) antriebsverbunden sind.

11. Garnknoteranordnung nach einem der Ansprüche 1 bis 10,
**dadurch gekennzeichnet,**
**dass** eine Umlenkvorrichtung (39) zum Umlenken von Garnsträngen (42, 43) vorgesehen ist, die an dem Knoterrahmen (2) verstellbar gehalten und von der Zwischenwelle (3) angetrieben ist.

12. Ballenpressvorrichtung mit einer Garnknoteranordnung nach einem der Ansprüche 1 bis 11,
**dadurch gekennzeichnet,**
**dass** die Ballenpressvorrichtung einen Presskanal aufweist, in dem mittels eines Presskolbens Ballenmaterial in einer Pressrichtung (P) zu einem Ballen gepresst wird,
**dass** der Garnknoter (1) seitlich des Presskanals angeordnet ist und
**dass** die Umlenkrolle (41) zwischen Presskanal und Garnknoter (1) angeordnet ist,
wobei die Umlenkrolle (41) zumindest im Wesentlichen parallel zur Pressrichtung (P) verstellbar ist.

13. Ballenpressvorrichtung nach Anspruch 12,
**dadurch gekennzeichnet,**
**dass** die Umlenkrolle (41) derart angeordnet ist, dass das Garn zumindest im Wesentlichen in Pressrichtung (P) zum Garnknoter (1) geführt wird.

## Claims

1. A twine knotter arrangement for knotting twine to tie a bale, the twine knotter arrangement comprising:
a twine knotter (1) and
a baler needle (52, 52') for feeding twine strands into a knotter region of the twine knotter (1),
**characterized in**
**that** the twine knotter arrangement also has a deflection roller (41) which can be adjusted relative to the twine knotter (1) and via which twine (42, 43) coming from the bale is deflected in the direction of the twine knotter (1), and an adjusting device (54) for adjusting the position of the deflection roller (41) as a function of the force (F_{R}) exerted by the twine (42, 43) on the deflection roller (41).

2. Twine knotter arrangement according to claim 1,
**characterized in**
**that** the adjusting device (54) can be adjusted via a spring element, hydraulically or pneumatically.

3. Twine knotter arrangement according to one of claims 1 or 2,
**characterized in**
**that** the twine knotter arrangement has a frame (55) on which the deflection roller (41) is guided in a translatable manner,
**that** the adjusting device (54) is on the one hand hinged to the frame (55) and on the other hand is supported against the deflection roller (41), and
**that** the adjusting device (54) is adjustable in length.

4. Twine knotter arrangement according to claim 3,
**characterized in**
**that** the deflection roller (41) is fixed to a roller holder (58) which is connected to the adjusting device (54).

5. Twine knotter arrangement according to claim 4,
**characterized in**
**that** the roller holder (58) has laterally projecting guide pins (61), which are guided in guide grooves (62, 63) of the frame (55).

6. Twine knotter arrangement according to one of claims 1 to 5,
**characterized in**
**that** the adjusting device (54) has a telescopic rod (56, 57), which is force-loaded in order to assume an extended position.

7. Twine knotter arrangement according to claim 6,
**characterized in**
**that** the telescopic rod (56, 57) is spring-loaded to assume the extended position.

8. Twine knotter arrangement according to one of claims 1 to 7, **characterized in**
**that** the twine knotter (1) has the following:
a knotter frame (2),
an intermediate shaft (3), which is rotatably supported on the knotter frame (2) around a longitudinal axis (L) and which has a shaft input (4) for connecting the intermediate shaft (3) to an output element (61) of a knotter drive shaft (54), and
at least one bill hook shaft (9, 10), which is rotatably supported around a bill hook axis (K1, K2) on the knotter frame (2), which is drive-wise connected to the intermediate shaft (3) and which carries a bill hook (11, 12) for forming a knot.

9. Twine knotter arrangement according to claim 8,
**characterized in**
**that** the twine knotter (1) is formed as an independent unit, wherein the twine knotter (1) is drive-wise detachably connectible via the shaft input (4) of the intermediate shaft (3) to the knotter drive shaft (54).

10. Twine knotter arrangement according to one of claims 1 to 9,
**characterized in**
**that** two bill hook shafts (9, 10) are provided, each of which is rotatably supported around a bill hook axis (K1, K2) on the knotter frame (2) and which are drive-wise connected to the intermediate shaft (3).

11. Twine knotter arrangement according to one of claims 1 to 10,
**characterized in**
**that** a deflection device (39) is provided for redirecting the twine strands (42, 43), which is held movably on the knotter frame (2) and which is driven by the intermediate shaft (3).

12. Baling device with a twine knotter arrangement according to any one of claims 1 to 11,
**characterized in**
**that** the baling device has a baling channel, in which bale material is pressed to form a bale in a pressing direction (P) by means of a ram,
**that** the twine knotter (1) is arranged to the side of the baling channel, and that the deflection roller (41) is arranged between the baling channel and the twine knotter (1),
wherein the deflection roller (41) is adjustable at least substantially parallel to the pressing direction (P).

13. Baling device according to claim 12,
**characterized in**
**that** the deflection roller (41) is arranged in such a way that the twine is guided at least substantially in the pressing direction (P) to the twine knotter (1).

## Revendications

1. Dispositif de nouage de fil pour nouer du fil afin ficeler une balle, le dispositif de nouage de fil présentant les éléments suivants :
un noueur de fil (1) et
une aiguille de liaison (52, 52') pour acheminer les écheveaux de fil dans une zone de nouage du noueur de fil (1),
**caractérisé en ce que**
le dispositif de nouage de fil présente en outre un rouleau d'inversion (41) réglable par rapport au noueur de fil (1) grâce auquel le fil venant de la balle (42, 43) est dévié en direction du noueur de fil (1), et un dispositif de réglage (54) pour régler la position du rouleau d'inversion (41) en fonction de la force (F_{R}) exercée par le fil (42, 43) sur le rouleau d'inversion (41) .

2. Dispositif de nouage de fil selon la revendication 1, **caractérisé en ce que**
le dispositif de réglage (54) est réglable au moyen d'un élément à ressort, hydraulique ou pneumatique.

3. Dispositif de nouage de fil selon une des revendications 1 ou 2, **caractérisé en ce que**
le dispositif de nouage de fil (55) présente un cadre sur lequel le rouleau d'inversion (41) est guidé en étant mobile en translation,
le dispositif de réglage (54) s'appuie d'une part sur le cadre (55) et d'autre part s'appuie contre le cylindre d'inversion (41), et
le dispositif de réglage (54) est réglable en longueur.

4. Dispositif de nouage de fil selon la revendication 3, **caractérisé en ce que**
le rouleau d'inversion (41) est fixé à un support de rouleau (58) qui est connecté au dispositif de réglage (54) .

5. Dispositif de nouage de fil selon la revendication 4, **caractérisé en ce que**
le support de rouleau (58) présente des tourillons de guidage saillant latéralement (61) qui sont guidés dans des rainures de guidage (62, 63) du cadre (55).

6. Dispositif de nouage de fil selon une des revendications 1 à 5, **caractérisé en ce que**
le dispositif de réglage (54) présente une barre télescopique (56, 57) qui est sollicitée avec de la force pour prendre une position sortie.

7. Dispositif de nouage de fil selon la revendication 6, **caractérisé en ce que**
la barre télescopique (56, 57) est sollicitée par ressort pour prendre la position sortie.

8. Dispositif de nouage de fil selon une des revendications 1 à 7, **caractérisé en ce que**
le noueur de fil (1) présente des éléments suivants :
un cadre de noueur (2),
un arbre intermédiaire (3) qui s'appuie en rotation au niveau du cadre de noueur (2) autour d'un axe longitudinal (1) et qui présente une entrée d'arbre (4) pour connecter l'arbre intermédiaire (3) à un élément mené (61) d'un arbre moteur de noueur (54), et
au moins un arbre à crochet de noueur (9, 10) s'appuyant de manière à pouvoir tourner autour d'un axe de crochet de noueur (K1, K2) au niveau du cadre de noueur (2) et qui est connecté avec entraînement avec l'arbre intermédiaire (3) et comporte un crochet de noueur (11, 12) pour former un noeud.

9. Dispositif de nouage de fil selon la revendication 8, **caractérisé en ce que**
le noueur de fil (1) est réalisé sous forme d'une unité de construction autonome, le noueur de fil (1) étant connectable avec entraînement de manière dissociable avec l'arbre moteur de noueur (54) par l'entrée d'arbre (4) de l'arbre intermédiaire (3).

10. D Dispositif de nouage de fil selon une des revendications 1 à 9, **caractérisé en ce**
**qu'**il est prévu deux arbres à crochet de noueur (9, 10) qui s'appuient respectivement de manière à pouvoir tourner au niveau du cadre de noueur (2) autour d'un axe de crochet de noueur (K1, K2) et qui sont respectivement connectés avec entraînement à l'arbre intermédiaire (3).

11. Dispositif de nouage de fil selon une des revendications 1 à 10, **caractérisé en ce**
**qu'**il est prévu un dispositif d'inversion (39) pour dévier les écheveaux de fil (42, 43) qui sont maintenus par le cadre de noueur (2) et entraînés par l'arbre intermédiaire (3).

12. Dispositif de nouage de fil selon une des revendications 1 à 11, **caractérisé en ce que**
le dispositif de presse à balles présente un canal de presse lequel, au moyen d'un piston de presse, du matériau de balle est comprimé pour former une balle dans un sens de presse (P),
le noueur de fil (1) est disposé à côté du canal de presse et
le rouleau d'inversion (41) est disposé entre le canal de presse et le noueur de fil (1),
le rouleau d'inversion (41) est réglable du moins sensiblement parallèlement au sens de presse (P).

13. Dispositif de nouage de fil selon la revendication 12, **caractérisé en ce que**
le rouleau d'inversion (41) est disposé de manière à ce que le fil soit guidé du moins sensiblement dans le sens de presse (P) vers le noueur de fil (1).
